# EUROPÄISCHE PATENTSCHRIFT

(11) **EP 2 684 200 B1**
(45) Veröffentlichungstag und Bekanntmachung des Hinweises auf die Patenterteilung: **13.07.2016**
(21) Anmeldenummer: 12712928.6
(22) Anmeldetag: 08.03.2012
(51) Int. Cl.: H01F 7/16

(54) **ELEKTROMAGNETISCHER AKTOR**
ELECTROMAGNETIC ACTUATOR
ACTIONNEUR ÉLECTROMAGNÉTIQUE

(30) Priorität: 11.03.2011 DE 102011013702
(43) Veröffentlichungstag der Anmeldung: 15.01.2014
(73) Patentinhaber: Kendrion (Villingen) GmbH, 78048 Villingen-Schwenningen (DE)
(72) Erfinder: POTT, Ronald, 38524 Sassenburg (DE); OHLENDORF, Gerhardt, 38110 Braunschweig (DE); SOLTERBECK, Stefan, 38165 Essenrode (DE); RÜTEMANN, Hergen, 38103 Braunschweig (DE); BECK, Armin, 78588 Denkingen (DE); MAIWALD, Wolfram, 78052 Villingen-Schwenningen (DE); THEISSL, Gerhard, A-8542 Sankt Peter im Sulmtal (AT); LAMBAUERL, Emil, A-8403 Lebring (AT)
(74) Vertreter: Westphal, Mussgnug & Partner Patentanwälte mbB
(86) Internationale Anmeldenummer: PCT/EP2012/001044
(87) Internationale Veröffentlichungsnummer: WO 2012/123086

(56) Entgegenhaltungen:
- EP-A1- 2 187 037
- DE-A1- 10 247 436

## Beschreibung

Die Erfindung betrifft einen elektromagnetischen Aktor gemäß Oberbegriff des Patentanspruchs 1.

Ein solcher elektromagnetischer Aktor ist bspw. aus der EP 2 187 037 A1 bekannt. Einen ähnlichen elektromagnetischen Aktor beschreibt die DE 10 2007 013 525 A1.

Elektromagnetische Aktoren sind bspw. als Hubmagnete oder Betätigungsmagnete bekannt, bei denen ein mit einem Stößel verbundener Anker von einer durch die Bestromung der Magnetspule erzeugten Magnetkraft in Richtung eines Polkerns bewegt wird. Der Stößel endet dabei in einem Steuerraum, der eine Betätigungseinrichtung umfasst. Diese Betätigungsvorrichtung, bspw. ein Schalter oder eine Ventileinrichtung als fluidtechnische Anwendung wird von dem Stößel betätigt, indem bspw. zur Druckregelung mittels der Magnetspule eine bestromungsabhängige Kraft erzeugt wird, mit der ein Dichtelement, z, Bsp. eine Kugel eines Ventils über den Stößel in den Ventilsitz des Ventils gedrückt wird, um dadurch bestromungsabhängig unterschiedliche Drücke einstellen bzw. regeln zu können.

Die erwähnte EP 2 187 037 A1 offenbart eine Kraftstoffzumesseinheit zur saugseitigen Fördermengenreglung einer Kraftstoffhochdruckpumpe einer Kraftstoffeinspritzeinrichtung für Brennkraftmaschinen bekannt, welche ein von einem elektromagnetischen Aktor betätigtes Regelventil aufweist. Dieser Aktor umfasst eine Magnetspule, einen auf einem Stößel angeordneten Anker, der in einer Hülse geführt und bei Bestromung der Magnetspule durch die dadurch erzeugte Magnetkraft so bewegt wird, dass der in einen Steuerraum eines Ventilgehäuses des Regelventils ragende Stößel ein kolbenförmiges Ventilglied betätigt. Dabei wird der

Stößel einmal ventilseitig in einem in dem Ventilgehäuse angeordneten Lager und andererseits in einem dem Ventilgehäuse abgewandten Endbereich in einer Lagebuchse verschiebbar gelagert, wobei sich an diese Lagerbuchse ein Hohlraum anschließt, in den das Ende des Stößels eintaucht.

Beim Betreiben dieser bekannten Kraftstoffzumesseinheit wird durch das Bewegen des Stößels zwangsläufig Kraftstoff im Inneren der Kraftstoffzumesseinheit verschoben. Damit die Funktion der Kraftstoffzumesseinheit dadurch nicht behindert wird, wird vorgeschlagen, diese Lagerbuchse mit mindestens einer axialen Nut als Druckausgleichsbohrung auszubilden, die sowohl an ihrer Außenseite als auch an ihrer Innenseite angeordnet werden kann. Mit einer solchen Lagerbuchse mit Axialnuten soll auf Druckausgleichsbohrungen innerhalb des Ventilgehäuses und/oder im Anker zumindest teilweise verzichtet werden können.

Diese bekannte Maßnahme, also axiale Nuten in Lagerbuchsen als Druckausgleichbohrungen vorzusehen, reichen jedoch für einen zuverlässigen Druckausgleich in ungünstigen Betriebszuständen des elektromagnetischen Aktors nicht aus.

So müssen bspw. Druckregelventile für moderne Diesel Common-Rail-Einspritzsysteme den Einspritzdruck sehr präzise regeln und benötigen eine hohe Stabilität sowohl gegen Hockdruckschwankungen als auch zunehmend gegen erhöhte Drücke auf der Niederdruckseite.

Dabei treten Druckpulsationen oft nicht nur in bestimmten Druckbereichen auf, sondern auch in ungünstigen Betriebszuständen, wie bspw. bei einem Kaltstart des Motors bei -25°C. Diese Druckpulsationen im Hochdruckspeicher (Common-Rail) führen meistens dazu, dass auch weitere Anbauteile, z. Bsp. Tankleitungen zu Schwingungen angeregt werden und gehen einher mit einem schlechten Motorlauf.

Der Vollständigkeit halber sei auf die DE 10 2006 054 941 B3 verwiesen, die einen Elektromagneten mit einem zylinderförmigen hohlen und mit einem Medium gefüllten Magnetkörper beschreibt, in welchem ein Hubanker mit einem Anker und einem in Betätigungsrichtung weisenden Stößel im Medium durch eine Magnetkraft axial bewegt wird. Der Stößel ist in einer axialen Bohrung im Anker verankert und der Anker weist zur Herstellung eines Druckausgleichs zwischen den beiden Stirnseiten des Ankers Druckausgleichsöffnungen auf, die möglichst nahe im Bereich der den Stößel aufnehmenden axialen Bohrung angeordnet sind. Damit wird ein Druckausgleich lediglich im Hubraum des Ankers erzielt. Auch diese Maßnahme führt nicht zu einer erwünschten Reduzierung von Druckpulsationen bei einem elektromagnetischen Aktor der eingangs genannten Art.

Der Erfindung liegt die Aufgabe zugrunde, einen elektromagnetischen Aktor der eingangs genannten Art anzugeben, der gegenüber Druckpulsationen deutlich robuster reagiert.

Diese Aufgabe wird gelöst durch einen elektromagnetischen Aktor mit den Merkmalen des Patentanspruchs 1.

Bei einem solchen elektromagnetischer Aktor mit einer in einem Gehäuse des Aktors angeordneten Magnetspule und einer durch Bestromung der Magnetspule in einem Ankerplattenraum in Richtung eines Stirnendes des Gehäuses bewegbaren Ankerplatte, welche mit einem endseitig durch das Gehäuse geführten und in einen Steuerraum ragenden Ankerstößel verbunden ist, ist erfindungsgemäß vorgesehen, dass zur Herstellung eines Druckausgleichs zwischen dem Ankerplattenraum und dem Steuerraum die Ankerplatte mit wenigstens einer axialen Druckausgleichsbohrung ausgebildet ist und das Gehäuse wenigstens ein zwischen Ankerplatte und Steuerraum angeordnetes Lager mit wenigstens einer Axialnut aufweist, in welchem der Ankerstößel verschiebbar gelagert ist. Zusätzlich fluchtet die wenigstens eine Druckausgleichsbohrung der Ankerplatte mit der Axialnut des wenigstens einen Lagers, so dass bei einem Regelventil als elektromagnetischer Aktor in fluidtechnischen Anwendungen ein möglichst direkter Fluidaustausch und damit auch ein Druckaustausch ermöglicht wird.

Damit ist es möglich, einen direkten Druckausgleich zwischen dem Ankerplattenraum und dem Steuerraum zu erzielen, so dass das Auftreten von Druckpulsationen in der von dem Ankerstößel betätigten Betätigungsvorrichtung, insbesondere in einer Ventileinrichtung deutlich verringert wird.

In einer Weiterbildung der Erfindung ist der Ankerstößel in zwei Lagern mit jeweils wenigstens einer Axialnut gelagert, wobei ein Lager am ankerseitigen Stirnende des Gehäuses und ein weiteres Lager an einem ankerabgewandten Stirnende des Gehäuses angeordnet ist. Damit ist eine exakte Führung des Ankerstößels in dem Gehäuse gewährleistet, wobei aufgrund der Axialnuten im Inneren der Lager wegen der geringeren Berührungsflächen auch die Reibung vermindert ist.

Eine besonders vorteilhafte Ausgestaltung der Erfindung ergibt sich mit einer radial zum Umfang des Ankerstößels benachbarten Anordnung der wenigstens einen Druckausgleichsbohrung in der Ankerplatte. Dadurch dass diese Druckausgleichsbohrung direkt benachbart zur den Ankerstößel aufnehmenden Bohrung der Ankerplatte angeordnet ist, ergibt sich ein direkterer Druckausgleich mit dem Steuerraum.

Gemäß einer weiteren Ausgestaltung der Erfindung wird der Druckausgleich durch die Anzahl und/oder die Größe der Druckausgleichsbohrungen in der Ankerplatte eingestellt. Damit kann das Maß des Druckausgleichs eingestellt werden, um die in der von dem Ankerstößel betätigten Betätigungsvorrichtung auftretende Druckpulsationen, insbesondere in einer Ventileinrichtung zu minimieren.

Weiterbildungsgemäß umfasst der Steuerraum eine von dem Ankerstößel betätigbare Betätigungsvorrichtung, vorzugsweise eine Ventileinrichtung, wobei das Gehäuse als Ventilgehäuse ausgebildet ist.

Ein verfahren zum Druckausgleich zwischen einem Ankerplattenraum und einem Steuerraum mittels des elektromagnetischen Aktors wird durchgeführt, indem das Maß des Druckausgleichs durch die Anzahl und/oder die Größe der Druckausgleichsbohrungen in der Ankerplatte eingestellt wird.

Dabei ist dieses Verfahren besonders effektiv, lässt sich also das Maß des Druckausgleichs besonders exakt einstellen, wenn die Axialnuten in den Lagerstellen hinreichend groß ausgeführt werden. Vorzugsweise werden hierzu sowohl in dem ankerseitigen Lager als auch in dem ankerabgewandten Lager jeweils vier auf dem inneren Umfang verteilte Axialnuten mit jeweils einem Querschnitt zwischen 0,30 mm² und 0,50 mm² eingebracht. Die beiden Lager können auch jeweils mit nur zwei Axialnuten ausgebildet werden, die vorzugsweise jeweils mit einem Querschnitt zwischen 0,50 mm² und 1,50 mm² ausgebildet werden können.

Besonders vorteilhaft ist es, wenn zur Einstellung des Druckausgleichs die Ankerplatte entweder mit vier kreisförmig angeordneten Druckausgleichsbohrungen mit jeweils einem Querschnitt zwischen 0,80 mm² und 1,50 mm² oder mit zwei Druckausgleichsbohrungen mit jeweils einem Querschnitt zwischen 1,20 mm² und 2,50 mm² ausgebildet wird.

Dabei ist es erfindungsgemäß vorgesehen, dass die Axialnuten und die Druckausgleichsbohrungen durch dieselbe Anzahl und dieselbe Position miteinander fluchten und damit ein möglichst geradliniger Druckausgleich stattfinden kann.

Die Erfindung wird nachfolgend anhand von Ausführungsbeispielen unter Bezugnahme auf die beigefügten Figuren ausführlich beschrieben. Es zeigen:
- Figur 1: eine Schnittdarstellung eines elektromagnetischen Aktors gemäß einer Ausführungsform der Erfindung,
- Figur 2a: eine Draufsicht auf eine Ankerplatte des elektromagnetischen Aktors nach Figur 1, und
- Figur 2b: eine Schnittdarstellung der Ankerplatte gemäß Schnitt A-A nach Figur 2a.
- Figur 3: eine Draufsicht auf eine ankerseitige Lagerstelle des elektromagnetischen Aktors nach Figur 1,
- Figur 4: eine Draufsicht auf eine ankerabgewandte Lagerstelle des elektromagnetischen Aktors nach Figur 1,

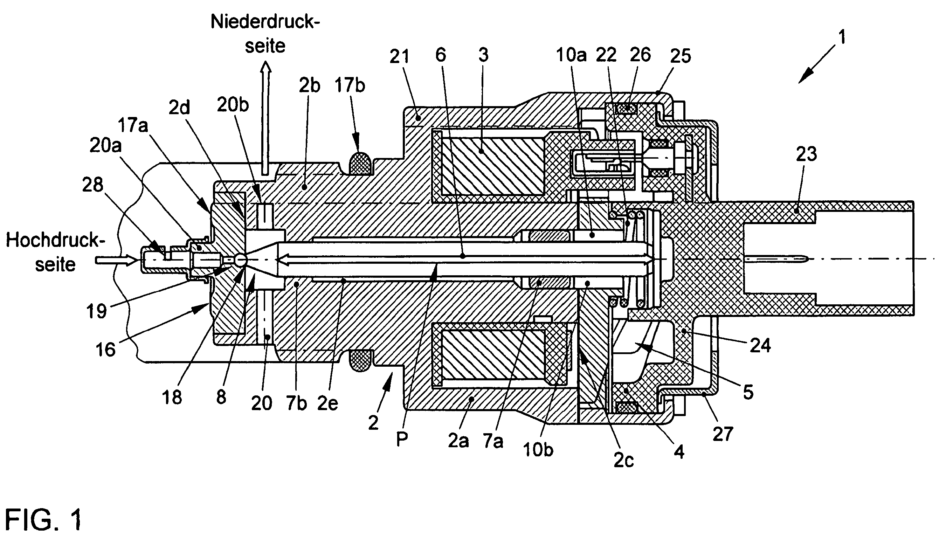

Der in Figur 1 dargestellt elektromagnetische Aktor 1 stellt ein Druckregelventil für einen Hochdruckspeicher oder eine Hochdruckförderpumpe eines Kraftstoffeinspritzsystems dar.

Dieses Druckregelventil 1 gemäß Figur 1 umfasst als Gehäuse ein Ventilgehäuse 2 aus weichmagnetischem Material, das in einem im Wesentlichen zylinderförmigen Ventilgehäuseteil 2a eine Magnetspule 3 aufnimmt und in einem sich daran anschließenden, mit kleinerem Durchmesser ausgebildeten weiteren zylinderförmigen Ventilgehäuseteil 2b eine Ventileinrichtung 16 in Form eines Sitzventils ausbildet. Dieses Druckregelventil 1 wird mit diesem weiteren Ventilgehäuseteil 2b in einen Hochdruckspeicher (nicht dargestellt) eingeschraubt, wobei über eine Beißkante 17a die Hochdruckseite gegenüber der Niederdruckseite abgedichtet wird, während mittels einer Dichtung 17b eine Abdichtung gegenüber der Umgebung erfolgt.

Ein Ventilstößel 6 ist axial beweglich in einer axialen Ventilstößelbohrung 2e des Ventilgehäuses 2 mittels zwei Lager 7a und 7b gelagert, der an seinem sitzventilseitigen Ende konisch ausgebildet ist und dort ein kugelförmiges Dichtelement 18 des Sitzventils 16 betätigt. Der Ventilsitz für diese Ventilkugel 18 wird von einem Ventilsitzelement 19 gebildet, das stirnseitig in einer Sacklochbohrung des Ventilgehäuseteils 2b angeordnet ist und einen von der Ventilkugel 18 verschließbaren Kanal 20a zum Common Rail aufweist, der über ein Filterelement 27 eine Verbindung zu dem Hochdruckspeicher herstellt.

Im axialen Bereich Ventileinrichtung 16 weist der Ventilgehäuseteil 2b einen als Steuerraum ausgebildeten Absteuerraum 8 auf, der über radial verlaufenden Absteuerbohrungen 20b in dem Ventilgehäuseteil 2b mit einem Tanksystem (nicht dargestellt) verbunden wird.

Zur Aufnahme der Magnetspule 3 weist das Ventilgehäuseteil 2a eine kreisringförmige Zylinderbohrung 21 auf, so dass dadurch eine Polfläche darstellende geteilte Stirnfläche als ankerseitiges Stirnende 2c des Ventilgehäuses 2, also des Ventilgehäuseteils 2a gebildet wird. Diesem Stirnende 2c steht eine Polfläche einer Ankerplatte 4 gegenüber, die fest mit dem Ventilstößel 6 verbunden ist.

Die Ankerplatte 4 wird von einer Druckfeder 22 in Richtung des Stirnendes 2c des Ventilgehäuses 2 bzw. des Sitzventils 16 beaufschlagt, die von einer Sacklochbohrung in einem Anschlussteil 23 aufgenommen wird und sich gegen dieselbe abstützt. Dieses Anschlussteil 23 dient zur Begrenzung des Hubs der Ankerplatte 4, zur Aufnahme von elektrischen Anschlussleitungen der Magnetspule 3 und als das Druckregelventil 1 abschließendes Gehäuseteil.

Das Stirnende 2c des Ventilgehäuseteil 2a ist rohrförmig zur Aufnahme eines entsprechend ausgebildeten zylindrischen Teils 24 des Anschlussteils 23 verlängert, wobei zur Abdichtung des Ankerplattenraums 5 nach außen zwischen der Außenumfangsfläche des zylindrischen Teils 24 und der inneren Umfangsfläche der rohrförmigen Verlängerung 25 eine Dichtung 26 vorgesehen ist.

Ist dieses Druckregelventil 1 bspw. an einen Hochdruckspeicher angeschlossen, bewirkt dessen Hochdruck im nichtbestromten Zustand der Magnetspule 3 ein Abheben der Ventilkugel 18 von dessen Ventilsitz, wodurch Medium aus dem Hochdruckspeicher über die Absteuerbohrungen 20 abfließen kann. Durch eine Bestromung der Magnetspule 3 wird die Ankerplatte 4 gegen die das Stirnende 2c des Ventilgehäuseteils 2a gezogen, so dass dadurch über den Ventilstößel 6 die Ventilkugel 18 in den Ventilsitz des Sitzventils 16 gedrückt wird, wodurch eine Regelung des Durchflusses in Abhängigkeit des Spulenstromes und damit auch eine Regelung des Hochdruckes durchgeführt werden kann.

Zur Realisierung eines Druckausgleichs zwischen dem Absteuerraum 8 und dem Ankerplattenraum 5 sind in der Ankerplatte 4 Druckausgleichsbohrungen 10a bis 10d bzw. 11a und 11b und in den in der Ventilstößelbohrung 2e angeordneten Lagern 7a und 7b axiale Nuten vorgesehen, wie nachfolgend genauer erläutert werden soll.

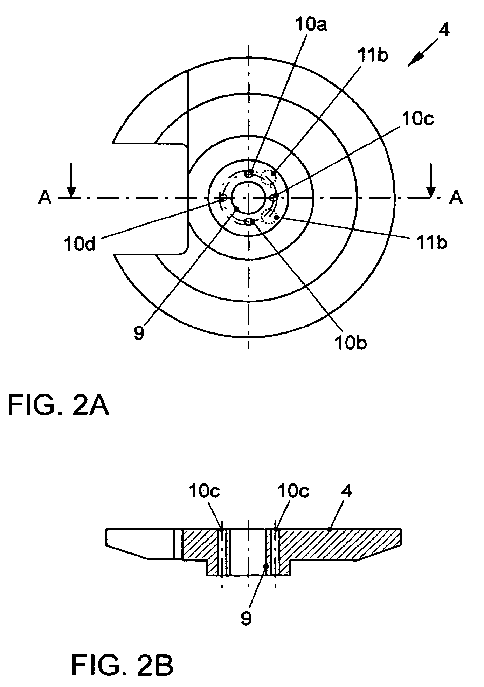

In der Ausführungsform des Druckregelventils 1 gemäß Figur 1 weist die Ankerplatte 4 vier auf einer Kreislinie gleichmäßig verteilte Druckausgleichsbohrungen 10a, 10b, 10c und 10d auf, wie in der Draufsicht auf diese Ankerplatte 4 gemäß Figur 2a dargestellt ist. In der Schnittdarstellung gemäß Figur 1 sind die beiden Druckausgleichsbohrungen 10a und 10b dargestellt. In der Schnittdarstellung gemäß Figur 2b sind die Druckausgleichsbohrungen 10c und 10d zu erkennen.

Alternativ kann die Ankerplatte 4 gemäß Figur 2a auch lediglich mit zwei Druckausgleichsbohrungen 11a und 11b ausgeführt werden (in Figur 2a gestrichelt dargestellt), deren Querschnitte jedoch ungefähr doppelt so groß sind wie in der Ausführungsform mit vier Druckausgleichsöffnungen 10a bis 10d. Aus Figur 2a ist zu erkennen, dass diese beiden Druckausgleichsöffnungen 11a und 11b hinsichtlich ihrer radialen Anordnung in einem rechten Winkel zueinander stehen.

In beiden Ausführungen der Ankerplatte 4 sind die Druckausgleichsbohrungen 10a bis 10d bzw. 11a und 11b direkt benachbart an der für die Aufnahme des Ankerstößels 6 vorgesehenen zentralen Bohrung 9 angeordnet. Die Ankerplatte 4 weist gemäß Figur 2 eine radial verlaufende Nut 28 auf, durch welche Spulenanschlüsse für die Magnetspule 3 geführt werden. Da diese Nut 28 ebenfalls druckausgleichend wirkt, wird in der Ausführung mit nur zwei Bohrungen 11a und 11b diese auf der der Nut 28 gegenüberliegender Seite angebracht, wie dies in Figur 2a deutlich zu erkennen ist.

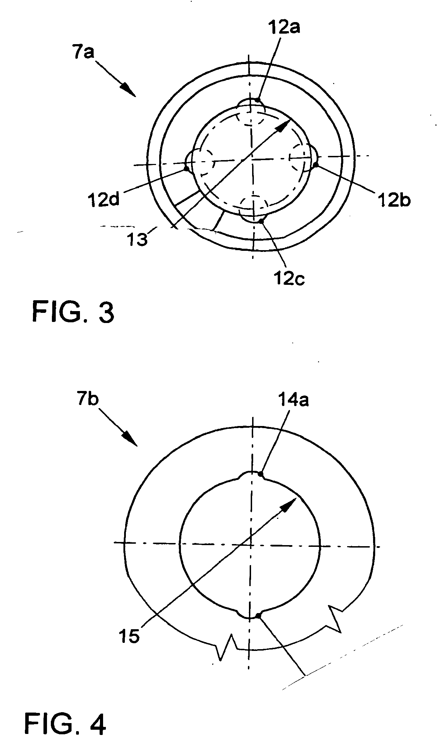

Das ankerseitige Lager 7a stellt eine Lagerbuchse aus Kunststoff, bspw. aus Torlon® dar, die in die Ventilstößelbohrung 2e eingepresst ist und deren Draufsicht die Figur 3 zeigt. Auf der Innenfläche 13 dieser Lagerhülse 7a sind gleichmäßig auf dem Umfang verteilte Axialnuten 12a, 12b, 12c und 12d angeordnet. Die Ankerplatte 4 mit den vier Druckausgleichsöffnungen 10a bis 10d und diese Lagerhülse 7a können so zueinander ausgerichtet sein, dass die vier Axialnuten 12a bis 12d mit den Druckausgleichöffnungen 10a bis 10d der Ankerplatte 4 fluchten, um damit einen direkten Fluidausgleich zu erzielen.

Die Figur 4 zeigt eine Draufsicht auf das Lager 7b, welches gemäß Figur 1 an dem ankerabgewandten Stirnende 2b des Ventilgehäuses 2 in der Ventilstößelbohrung 2e angeordnet ist. Auf der Innenfläche 15 dieses Lagers 7b sind vier um 90° versetzte Axialnuten 14a und bis 14d angeordnet. Auch diese Axialnuten 14a bis 14d sind fluchtend mit den Axialnuten der Lagerbuchse 7a und den Druckausgleichsbohrungen der Ankerplatte 4 ausgerichtet.

Durch diese Druckausgleichsbohrungen 10a bis 10e bzw. 11a und 11b in der Ankerplatte 4 und den Axialnuten 12a bis 12d bzw. 14a bis 14d in den beiden Lagern 7a und 7b wird ein Druckausgleich zwischen dem Ankerplattenraum 5 und dem Absteuerraum 8 bewirkt, so dass Druckpulsationen in dem angeschlossenen Druckspeicher (Common Rail) nicht gegen Ventilelemente wirken, sondern alle Ventilelemente umströmen. Dieser Druckausgleich ist schematisch in Figur 1 mittels eines Pfeils P dargestellt.

Die beiden Lager 7a und 7b können jeweils auch nur mit zwei Axialnuten 12a und 12b bzw. 14a und 14b ausgebildet werden.

Das Maß des Druckausgleichs zwischen dem Ankerplattenraum 5 und dem Absteuerraum 8 lässt sich durch eine Dimensionierung der Druckausgleichsbohrungen und/oder durch deren Anzahl einstellen, wenn die Summe der Querschnitte der Axialnuten jeweils in den beiden Lagern 7a und 7b hinreichend groß sind. Die letztgenannte Bedingung kann erreicht werden entweder durch eine Vergrößerung des Querschnitts und/oder Vergrößerung der Anzahl der Axialnuten in den Lagern 7a und 7b.

Hinsichtlich des ankerabgewandten Lagers 7b bedeutet dies, dass mit zwei Axialnuten 14a und 14b für eine Axialnut ein Querschnitt zwischen 0,50 mm² und 1,50 mm² und ein Querschnitt zwischen 0,30 mm² und 0,50 mm² bei vier Axialnuten entsprechend der Darstellung nach Figur 4 ausreichend ist. Natürlich können hierfür auch mehr als vier Axialnuten vorgesehen werden.

Die Axialnuten 12a bis 12d der ankerseitigen Lagerbuchse 7a weisen jeweils einen Querschnitt zwischen 0,30 mm² und 0,50 mm² auf. Werden nur zwei Axialnuten bei dieser Lagerbuchse 7a vorgesehen, ist ein Querschnitt zwischen 0,50 mm² und 1,50 mm² ausreichend. Auch diese Lagerbuchse 7a kann mit mehr als vier Axialnuten ausgebildet werden.

Zur Einstellung des Druckausgleichs können die Querschnitte der vier Druckausgleichsöffnungen 10a bis 10d der Ankerplatte 4 jeweils zwischen 0,80 mm² und 1,50 mm² bzw. bei einer Ankerplatte 4 mit zwei Druckausgleichsbohrungen 11a und 11b jeweils zwischen 1,50 mm² und 2,50 mm² liegen.

### Bezugszeichenliste

- 1: Elektromagnetischer Aktor
- 2: Gehäuse, Ventilgehäuse
- 2a: Ventilgehäuseteil
- 2b: Ventilgehäuseteil
- 2c: ankerseitiges Stirnende des Gehäuses 2
- 2d: ankerabgewandtes Stirnende des Gehäuses 2
- 2e: Ventilstößelbohrung
- 3: Magnetspule
- 4: Ankerplatte
- 5: Ankerplattenraum
- 6: Ankerstößel, Ventilstößel
- 7a: Lager, Lagerhülse
- 7b: Lager
- 8: Steuerraum, Absteuerraum
- 9: zentrale Bohrung in der Ankerplatte 4

- 10a - 10d: Druckausgleichsbohrungen in der Ankerplatte 4
- 11a: Druckausgleichsbohrung in der Ankerplatte 4
- 11b: Druckausgleichsbohrung in der Ankerplatte 4
- 12a - 12d: Axialnuten im Lager 7a
- 13: Innenfläche des Lagers 7a
- 14a: Axialnut des Lagers 7b
- 14b: Axialnut des Lagers 7b
- 15: Innenfläche des Lagers 7b
- 16: Ventileinrichtung, Sitzventil
- 17a: Beißkante
- 17b: Dichtung
- 18: Dichtelement, Ventilkugel
- 19: Ventilsitzelement

- 20a: Kanal
- 20b: Absteuerbohrungen
- 21: kreisringförmige Zylinderbohrung im Ventilgehäuseteil 2a
- 22: Druckfeder
- 23: Anschlussteil
- 24: zylindrischen Teils des Anschlussteils 23
- 25: Verlängerung des Ventilgehäuseteils 2a
- 26: Dichtung
- 27: Filterelement
- 28: Nut der Ankerplatte 4

## Patentansprüche

1. Elektromagnetischer Aktor (1) mit einer in einem Gehäuse (2) angeordneten Magnetspule (3) und einer durch Bestromung der Magnetspule (3) in einem Ankerplattenraum (5) in Richtung eines Stirnendes (2c) des Gehäuses (2) bewegbaren Ankerplatte (4), welche mit einem endseitig durch das Gehäuse (2) geführten und in einen Steuerraum (8) ragenden Ankerstößel (6) verbunden ist,
**dadurch gekennzeichnet, dass** zur Herstellung eines Druckausgleichs zwischen dem Ankerplattenraum (5) und dem Steuerraum (8) die Ankerplatte (4) mit wenigstens einer axialen Druckausgleichsbohrung (10a - 10b, 11a, 11b) ausgebildet ist und das Gehäuse (2) wenigstens ein zwischen Ankerplatte (4) und Steuerraum (8) angeordnetes Lager (7a, 7b) mit wenigstens einer Axialnut (12a - 12d, 14a, 14b) aufweist, in welchem der Ankerstößel (6) verschiebbar gelagert ist, und die wenigstens eine Druckausgleichsbohrung (10a - 10b, 11a, 11b) der Ankerplatte (4) mit der Axialnut (12a - 12d, 14a, 14b) des wenigstens einen Lagers (7a, 7b) fluchtet.

2. Elektromagnetischer Aktor (1) nach Anspruch 1,
**dadurch gekennzeichnet, dass** der Ankerstößel (6) in zwei Lagern (7a, 7b) mit jeweils wenigstens einer Axialnut (12a - 12d, 14a, 14b) gelagert ist, wobei ein Lager (7a) am ankerseitigen Stirnende (2c) des Gehäuses (2) und ein weiteres Lager (7b) an einem ankerabgewandten Stirnende (2d) des Gehäuses (2) angeordnet ist.

3. Elektromagnetischer Aktor (1) nach Anspruch 1 oder 2,
**dadurch gekennzeichnet, dass** die wenigstens eine Druckausgleichsbohrung (10a - 10b, 11a, 11b) in der Ankerplatte (4) radial benachbart zum Umfang des Ankerstößels (6) angeordnet ist.

4. Elektromagnetischer Aktor (1) nach einem der vorhergehenden Ansprüche,
**dadurch gekennzeichnet, dass** der Druckausgleich durch die Anzahl und/oder die Größe der Druckausgleichsbohrungen (10a - 10b, 11a, 11b) in der Ankerplatte (4) eingestellt wird.

5. Elektromagnetischer Aktor (1) nach einem der vorhergehenden Ansprüche,
**dadurch gekennzeichnet, dass** der Steuerraum (8) eine von dem Ankerstößel (6) betätigbare Betätigungsvorrichtung (16) umfasst.

6. Elektromagnetischer Aktor (1) nach Anspruch 5,
**dadurch gekennzeichnet, dass** das Gehäuse (2) als Ventilgehäuse mit einer Ventileinrichtung (16) als Betätigungsvorrichtung ausgebildet ist.

7. Elektromagnetischer Aktor (1) nach Ansprüche 2 bis 6, sofern abhängig von Anspruch 2,
**dadurch gekennzeichnet, dass** das ankerseitige Lager (7a) mit vier gleichmäßig auf dem inneren Umfang (13) verteilte axiale Nuten (12a - 12d) mit jeweils einem Querschnitt zwischen 0,30mm² und 0,50mm² oder mit zwei diametral auf dem inneren Umfang gegenüberliegenden axialen Nuten (12a, 12b) mit jeweils einem Querschnitt zwischen 0,50 mm² und 1,50 mm² ausgebildet ist.

8. Elektromagnetischer Aktor (1) nach Ansprüche 2 bis 7, sofern abhängig von Anspruch 2,
**dadurch gekennzeichnet, dass** das ankerabgewandte Lager (7b) mit vier gleichmäßig auf dem inneren Umfang (15) verteilte axiale Nuten (14a, 14b, 14c, 14d) mit jeweils einem Querschnitt zwischen 0,30 mm² und 0,50 mm² oder mit zwei gleichmäßig auf dem inneren Umfang (15) verteilte axiale Nuten (14a, 14b)mit jeweils einem Querschnitt zwischen 0,5 mm² und 1,5 mm² aufweist.

9. Elektromagnetischer Aktor (1) nach einem der vorhergehenden Ansprüche,
**dadurch gekennzeichnet, dass** die Ankerplatte (4) vier kreisförmig angeordnete Druckausgleichsbohrungen (10a - 10d) mit jeweils einem Querschnitt zwischen 0,8 mm² und 1,5 mm² aufweist.

10. Elektromagnetischer Aktor (1) nach einem der Ansprüche 1 bis 8,
**dadurch gekennzeichnet, dass** die Ankerplatte (4) zwei kreisförmig angeordnete Druckausgleichsbohrungen (11a, 11b) mit jeweils einem Querschnitt zwischen 1,2 mm² und 2,5 mm² aufweist.

## Claims

1. Electromagnetic actuator (1) having a solenoid (3) arranged in a housing (2) and an armature plate (4) which is able to be moved in an armature plate space (5) in the direction of a front end (2c) of the housing (2) by energisation of the solenoid (3), said armature plate being connected to an armature tappet (6) which is guided through the housing (2) on the end side and protrudes into a control space (8),
**characterised in that**
the armature plate (4) is formed with at least one axial pressure equalisation bore (10a - 10b, 11a, 11b) to achieve pressure equalisation between the armature plate space (5) and the control space (8), and the housing (2) has at least one bearing (7a, 7b) having at least one axial groove (12a - 12d, 14a, 14b), said bearing being arranged between the armature plate (4) and the control space (8), in which bearing the armature tappet (6) is mounted to be able to be moved, and the at least one pressure equalisation bore (10a - 10b, 11a, 11b) of the armature plate (4) is aligned with the axial groove (12a - 12d, 14a, 14b) of the at least one bearing (7a, 7b).

2. Electromagnetic actuator (1) according to claim 1,
**characterised in that**
the armature tappet (6) is mounted in two bearings (7a, 7b), each having at least one axial groove (12a - 12d, 14a, 14b), wherein one bearing (7a) is arranged on the front end (2c) of the housing (2) on the side of the armature and a further bearing (7b) is arranged on a front end (2d) of the housing (2) facing away from the armature.

3. Electromagnetic actuator (1) according to claim 1 or 2,
**characterised in that**
the at least one pressure equalisation bore (10a - 10b, 11a, 11b) is arranged in the armature plate (4) radially adjacent to the circumference of the armature tappet (6).

4. Electromagnetic actuator (1) according to one of the preceding claims,
**characterised in that**
pressure equalisation is adjusted by the number and/or size of the pressure equalisation bores (10a - 10b, 11a, 11b) in the armature plate (4).

5. Electromagnetic actuator (1) according to one of the preceding claims,
**characterised in that**
the control space (8) comprises an actuation device (16) which can be actuated by the armature tappet (6).

6. Electromagnetic actuator (1) according to claim 5,
**characterised in that**
the housing (2) is formed as a valve housing having a valve device (16) as an actuation device.

7. Electromagnetic actuator (1) according to claims 2 to 6, when dependent on claim 2,
**characterised in that**
the bearing (7a) on the side of the armature is formed with four axial grooves (12a - 12d), which are distributed evenly on the inner circumference (13), each having a cross section of between 0.30mm² and 0.50mm² or with two axial grooves (12a, 12b), which are diametrically opposite on the inner circumference, each having a cross section of between 0.50mm² and 1.50mm².

8. Electromagnetic actuator (1) according to claims 2 to 7, when dependent on claim 2,
**characterised in that**
the bearing (7b) facing away from the armature has four axial grooves (14a, 14b, 14c, 14d), which are distributed evenly on the inner circumference (15), each having a cross section of between 0.30mm² and 0.50mm² or has two axial grooves (14a, 14b), which are distributed evenly on the inner circumference (15), each have a cross section of between 0.5mm² and 1.5mm².

9. Electromagnetic actuator (1) according to one of the preceding claims,
**characterised in that**
the armature plate (4) has four pressure equalisation bores (10a - 10d) arranged in a circle, each having a cross section of between 0.8mm² and 1.5mm².

10. Electromagnetic actuator (1) according to one of claims 1 to 8,
**characterised in that**
the armature plate (4) has two pressure equalisation bores (11a, 11b) arranged in a circle, each having a cross section of between 1.2mm² and 2.5mm².

## Revendications

1. Actionneur électromagnétique (1) comprenant une bobine magnétique (3) logée dans un boîtier (2) ainsi qu'une plaque d'induit (4) mobile dans une chambre de plaque d'induit (5) en direction d'une extrémité frontale (2c) du boîtier (2) suite à l'alimentation en courant de la bobine magnétique (3) et reliée à une tige poussoir d'induit (6) s'étendant à son extrémité au travers du boîtier (2) et pénétrant dans une chambre de commande (8),
**caractérisé en ce que**
pour obtenir un équilibrage de pression entre la chambre de plaque d'induit (5) et la chambre de commande (8), la plaque d'induit (4) est réalisée avec au moins un perçage d'équilibrage de pression axial (10a, 10b, 11a, 11b), et le boîtier (2) comprend au moins un palier (7a, 7b), muni d'au moins une rainure axiale (12a - 12d, 14a, 14b), monté entre la plaque d'induit (4) et la chambre de commande (8), dans lequel la tige poussoir d'induit (6) est logée mobile en translation, et le perçage d'équilibrage de pression (10a, 10b, 11a, 11b) de la plaque d'induit (4) est aligné avec la rainure axiale (12a - 12d, 14a, 14b) du palier (7a, 7b).

2. Actionneur électromagnétique (1) conforme à la revendication 1,
**caractérisé en ce que**
la tige poussoir d'induit (6) est montée dans deux paliers (7a, 7b) ayant chacun au moins une rainure axiale (12a - 12d, 14a, 14b), un palier (7a) étant situé sur l'extrémité frontale situé côté induit (2c) du boîtier (2) tandis que l'autre palier (7b) est monté sur l'extrémité frontale (2d) du boîtier (2) située à l'opposé de l'induit.

3. Actionneur électromagnétique (1) conforme à la revendication 1 ou 2,
**caractérisé en ce que**
le perçage d'équilibrage de pression (10a, 10b, 11a, 11b) de la plaque d'induit (4) est positionné radialement au voisinage de la périphérie de la tige poussoir d'induit (6).

4. Actionneur électromagnétique (1) conforme à l'une des revendications précédentes,
**caractérisé en ce que**
l'équilibrage de pression est réglé par le nombre et/ou la dimension des perçages d'équilibrage de pression (10a, 10b, 11a, 11b) de la plaque d'induit (4).

5. Actionneur électromagnétique (1) conforme à l'une des revendications précédentes,
**caractérisé en ce que**
la chambre de commande (8) renferme un dispositif d'actionnement (16) pouvant être actionné par la tige poussoir d'induit (6).

6. Actionneur électromagnétique (1) conforme à la revendication 5,
**caractérisé en ce que**
le boîtier (2) est réalisé sous la forme d'un boîtier de soupape avec un dispositif de soupape (16) constituant le dispositif d'actionnement.

7. Actionneur électromagnétique (1) conforme à la revendication 2 et à l'une des revendications 3 à 6,
dans la mesure où elle dépend de la revendication 2,
**caractérisé en ce que**
le palier (7a) situé côté induit est réalisé avec quatre rainures axiales (12a - 12d) réparties uniformément sur sa périphérie interne (13) ayant chacune une section comprise entre 0,30 mm² et 0,50 mm², ou avec deux rainures axiales (12a, 12b) diamétralement opposées sur sa périphérie interne ayant chacune une section comprise entre 0,50 mm² et 1,50 mm².

8. Actionneur électromagnétique (1) conforme à la revendication 2 ou à l'une des revendications 3 à 7,
**caractérisé en ce que**
le palier (7b) situé à l'opposé de l'induit comprend quatre rainures axiales (14a, 14b, 14c, 14d) réparties uniformément sur sa périphérie interne (15) et ayant chacune une section comprise entre 0,30 mm² et 0,50 mm² ou deux rainures axiales (14a, 14b) réparties uniformément sur sa périphérie interne (15) ayant chacune une section comprise entre 0,5 mm² et 1,5 mm².

9. Actionneur électromagnétique (1) conforme à l'une des revendications précédentes,
**caractérisé en ce que**
la plaque d'induit (4) comporte quatre perçages d'équilibrage de pression (10a, 10d) répartis sur un cercle ayant chacun une section comprise entre 0,8 mm² et 1,5 mm².

10. Actionneur électromagnétique (1) conforme à l'une des revendications 1 à 8,
**caractérisé en ce que**
la plaque d'induit (4) comprend deux perçages d'équilibrage de pression (11a, 11b) répartis sur un cercle ayant chacun une section comprise entre 1,2 mm² et 2,5 mm².
